# EUROPEAN PATENT SPECIFICATION

(11) **EP 3 576 933 B1**
(45) Date of publication and mention of the grant of the patent: **30.11.2022**
(21) Application number: 18710114.2
(22) Date of filing: 31.01.2018
(51) Int. Cl.: B32B 1/02, B32B 3/06, B32B 3/12, B32B 3/26, B32B 5/02, B32B 5/26, B32B 7/12, B32B 7/14, B32B 9/02, B32B 9/04, B32B 23/10, B32B 23/08, B32B 27/08, B32B 27/12, B65B 43/00

(54) **CARGO COVER AND METHOD FOR INSULATING A CARGO BY USING THE SAME**
LADUNGSABDECKUNG UND VERFAHREN ZUR ISOLIERUNG EINER LADUNG UNTER VERWENDUNG DIESER ABDECKUNG
HOUSSE DE CARGAISON ET MÉTHODE D'ISOLATION D'UNE CARGAISON EN L'UTILISANT

(30) Priority: 31.01.2017 GB 201701603; 13.03.2017 GB 201703989; 30.08.2017 GB 201713917; 03.11.2017 GB 201718276
(43) Date of publication of application: 11.12.2019
(73) Proprietor: Hunt Technology Limited, Rickmansworth, Hertfordshire WD3 1RE (GB)
(72) Inventor: WOODBRIDGE, Timothy John, London W1M 9FA (GB); SQUIRES, Leslie, Rosemount Blairgowrie PH10 6LA (GB); SMITH, James, Warrington Lancashire WA5 0EP (GB)
(74) Representative: Greaves Brewster LLP
(86) International application number: PCT/GB2018/050286
(87) International publication number: WO 2018/142133

(56) References cited:
- EP-A1- 1 819 509
- WO-A1-2009/024804
- WO-A1-2013/025827
- US-A- 4 442 162
- US-A1- 2011 258 972
- US-A1- 2015 367 604

## Description

### TECHNICAL FIELD

This invention relates to cargo covers and to methods of insulating cargo.

### BACKGROUND

Many products are transported long distances as cargo and are required to be kept within defined temperature ranges during transport. Pharmaceutical products and perishable food products are examples of such products, as are certain electronic items. Products may be shipped by any known means, road, ship or air transport, and are usually packed on pallets for ease of handling during shipping. The palletised goods may be potentially subjected to wide temperature fluctuations during transport. For example, they may be held at relatively low temperatures in the cargo hold of an aircraft and then left outside prior to the next stage of their journey and be subjected to high incident radiation and high ambient temperatures.

Products which are particularly sensitive to temperature changes during transport may advantageously be palletised and then protected with a thermal insulation cover (cargo cover). A cargo cover may, for example, cover part of a pallet, typically the four sides and top of the pallet or, by providing a protective sheet under the pallet may cover all six sides of the pallet.

Current thermally-insulating cargo covers include a range of materials which may be for example a simple, thin protective cover e.g. a single-layer sheet, which may carry a reflective surface, which provides a means of modestly attenuating the effects of external temperature fluctuations for example by reducing the direct influence of incident solar radiation.

Alternative commercially available cargo covers are made from multi-layer materials designed to provide more significant thermal insulation properties i.e. their thermal insulation values for example as measured by thermal resistance (R-value in m².K/W), contribute to their performance in protecting pallet contents from excessive thermal fluctuations.

Examples of such covers include those made from either single or multiple layers of bubble-wrap type materials, often laminated to reflective (low emissivity) outer layers. The thermal insulation performance of such laminated materials is not particularly good i.e. the R-values are relatively low, since heat transfer by convection can occur within the air bubbles which are macro-bubbles, the bubble dimensions being measured in multiple millimetres. The reflective outer surface of products which incorporate reflective outer layers also give problems of glare when handled in bright sunlight. A further disadvantage of these covers is that when the covers themselves are being shipped to the customer for use, they are not very compressible and therefore are voluminous and relatively expensive to ship.

Many prior art cargo covers are moisture vapour impermeable, which can lead to undesirable condensation within the cover. There is hence a need for vapour permeable cargo covers.

An example of a known moisture vapour permeable (breathable) cargo cover design is the Tyvek^{®} XTREME^{™} W50 Cargo Cover (Du Pont). This cover comprises a layer of flash-spun polyethylene reflectively coated on one side with aluminium, giving a low emissivity surface, and adhesively bonded, on the aluminised side, to a wadding i.e. a fibrous, bulky thermal insulation layer. A smooth, fibrous, air-open nonwoven fabric is further bonded to the bulky insulation layer and forms the inner surface of the cover.

The low-emissivity surface of the Tyvek^{®} XTREME^{™} W50 Cargo Cover faces inwards, which reduces its effectiveness against incident solar radiation. However, the aluminised nature of the low emissivity surface would lead to increased oxidation and corrosion if it was exposed outwards, particularly on exposure to acid rain or corrosive ambient conditions such as salt-laden air in coastal and marine environments.

A further problem with prior art cargo covers is that they fail to mitigate uneven temperature increases within cargo. For example it has been found that cargo covers lead to more rapid temperature increases in an upper region of a pallet compared to a lower region.

WO2013/025827 concerns a breathable product for protective mass transportation and cold chain applications, in particular a reflective sheet for covering temperature sensitive products.

In US2011/258972 an airtight cover assembly includes a side panel folded around goods on a pallet presenting top and bottom opening, a top panel with a plurality of pouches positioned on an inside surface above a vented rigid plate, and a bottom panel encloses the pallet.

However, there remains a need in the art for alternative and improved cargo covers. It is an object of the invention to address at least one problem associated with the prior art.

### SUMMARY OF THE INVENTION

Some aspects of the invention relate to a cargo cover comprising a plurality of different flexible insulation laminates.

One aspect of the invention provides a cargo cover comprising: a first flexible insulation laminate for covering a first part of the cargo, the first laminate comprising a first arrangement of layers; and a second flexible insulation laminate for covering a second part of the cargo, the second laminate comprising a second arrangement of layers which is different from the first arrangement of layers, the first laminate being joined to, or arranged to be joined to, the second laminate, wherein the first insulation laminate of the cargo cover comprises a phase change material layer including a flexible insulation material comprising a flexible porous medium defining a pore volume, and a solid/liquid phase change material (PCM) within the pore volume.

Optionally, the cargo cover may comprise one or more further flexible insulation laminates for covering one or more further parts of the cargo, said one or more further laminates comprising further arrangements of layers different from the first and second arrangements of layers and being joined to, or arranged to be joined to, at least one of the first and second laminates.

Optionally, the cargo cover may comprise a plurality of first laminates and/or a plurality of second laminates.

The first, second or further flexible insulation laminates may each independently comprise a cargo cover laminate according to any aspect or embodiment of the invention herein.

The first and/or second flexible insulation laminate may optionally be an insulation laminate as described anywhere herein.

Optionally, the first and/or second laminate may comprise:
a flexible, vapour permeable cargo cover laminate comprising:
   an outer layer comprising a substrate bearing a coating, the coating having particles of infra-red reflective matter dispersed within a polymeric matrix and providing an exposed low-emissivity surface on an outward face of the outer layer; and
   a support layer laminated to an inward face of the outer layer; or
a flexible vapour impermeable cargo cover laminate comprising:
   a vapour impermeable outer layer comprising an exposed low-emissivity surface on an outward face of the outer layer;
   an inner convection barrier layer; and
   an insulation core comprising a fibrous wadding, the insulation core being sandwiched between the outer and inner layers.

Suitably, the first flexible insulation laminate may be arranged to cover a top of the cargo, e.g. the top of a pallet of cargo. Additionally or alternatively, the second flexible insulation laminate may be arranged to cover a side of the cargo. Suitably, the second flexible insulation laminate may be arranged to cover four sides of a pallet of cargo. Advantageously, the first flexible insulation laminate may be arranged to cover a top of the cargo and comprise a vapour permeable laminate as defined or described anywhere herein.

Optionally, the second flexible insulation laminate may be arranged to cover a side of the cargo and comprise a vapour permeable laminate or a vapour impermeable laminate as defined or described anywhere herein.

In an embodiment, the cargo cover comprises: a first flexible insulation laminate for covering a top of the cargo, the first laminate being a vapour permeable laminate, e.g. as defined or described anywhere herein; and a second flexible insulation laminate for covering a side of the cargo, the second laminate being a vapour permeable or vapour impermeable laminate, e.g. as defined or described anywhere herein, each laminate of the cargo cover being joined to, or arranged to be joined to, at least one of the other laminates.

Conveniently, the first flexible insulation laminate may have a higher thermal resistance than the second flexible insulation laminate. In this way the cargo cover can provide additional insulation where it is most required, i.e. at the top where environmental exposure is greatest.

A cargo cover in accordance with any aspect of the invention may simply be sheet-like. However, preferably, the cargo cover may be arranged to form a cavity for receiving cargo. In particular, the cargo cover may be cap-shaped, in particular box-shaped, to receive and fit snugly over a pallet of cargo. In particular, the cargo cover may be generally oblong or square in plan, with four sides, a top and a bottom opening for receiving cargo.

The cargo cover laminates may comprise fixing means for being fixed together. Advantageously, the cargo cover laminates may comprise an overlap or overhang and/or an adhesive strip for affixing the laminate to a neighbouring laminate. For example, a first insulation laminate covering a top of the cargo may overlap a second insulation laminate covering a side of the cargo in a cap-like manner, or the second insulation laminate may overlap the top.

In an embodiment, at least some (and preferably all) of the cargo cover laminates of the cargo cover are joined together before deployment on cargo, using any joining system such as double-sided adhesive tape, adhesives such as hot melt or stitching. Seals between the laminates should be suitably water-tight to prevent ingress into the cover. Additionally or alternatively the cargo cover laminates can be joined together in-situ.

In an embodiment, two ends of a cargo cover laminate are joined together to form a side wrap of the cargo cover. The wrap may subsequently be combined with a top formed from another cargo cover laminate.

The cargo cover may include, or be co-operable with, an insulation base. Suitably, the insulation base may comprise a cargo cover laminate as defined or described anywhere herein. Conveniently, the base may comprise an impermeable cargo cover laminate, e.g. as defined or described anywhere herein.

Cargo cover laminates comprising an insulation core with a fibrous wadding are of particular benefit as the insulation base. In particular, the insulation core may be compressed to allow feet of the cargo to stand firmly on the base but opens up resiliently between feet to entrap air and increase the thermal resistance of the base.

The insulation base may comprise fixing means for being fixed to cargo cover laminates of the cargo cover. Advantageously, the base may comprise an overlap or overhang and/or an adhesive strip for affixing the base to a neighbouring laminate. For example, the base may overlap a second insulation laminate covering a side of the cargo in a cap-like manner, or the second insulation laminate may overlap the base.

The cargo cover includes a PCM layer. The first flexible insulation laminate comprises the PCM layer. The PCM layer may comprise discrete or intermittent amounts of PCM as described below in respect of the vapour permeable laminate. Optionally, the second flexible insulation laminate may include substantially no PCM layer.

The phase change material (PCM) layer includes a flexible insulation material comprising a flexible porous medium defining a pore volume, and a solid/liquid phase change material (PCM) within the pore volume.

Some aspects of the invention relate to methods of insulating cargo covers.

Thus, still another aspect of the invention provides a method of insulating cargo, the method comprising covering the cargo with a cargo cover laminate or cargo cover according to any aspect or embodiment of the invention described herein.

In its simplest form, covering the cargo may comprise draping a sheet-like cargo cover laminate or cargo cover over the cargo.

The cargo may conveniently comprise a pallet of cargo that is oblong in plan. Preferably, covering the cargo may comprise placing a generally cap-shaped cargo cover over the pallet of cargo. The method may comprise pulling a pre-assembled cover, or partly pre-assembled cover over the pallet of cargo. The method may comprise assembling the cargo cover in-situ.

Optionally, the cargo may have a target temperature in the range of from 15 to 25 °C. Alternatively, the cargo may have a target temperature in the range of from 2 to 8 °C. Suitably, the cargo may comprise an insulated container with an internal target temperature in the range of from 2 to 8 °C.

The method may comprise securing the cargo cover to the cargo.

Advantageously, the cargo may comprise a temperature-sensitive product. In an embodiment, the cargo comprises pharmaceuticals and/or perishable food.

The first and/or second flexible insulation laminate may optionally comprise a vapour permeable cargo cover laminate with an exposed low-emissivity surface provided by a coating containing dispersed infra-red reflective particles.

Suitably, the first and/or second flexible insulation laminate may optionally comprise a flexible, vapour permeable cargo cover laminate comprising: an outer layer comprising a substrate bearing a coating, the coating having particles of infra-red reflective matter dispersed within a polymeric matrix and providing an exposed low-emissivity surface on an outward face of the outer layer; and a support layer laminated to an inward face of the outer layer.

The flexible, vapour permeable cargo cover laminate has a low-emissivity surface on an outward face, attenuating the effects of external temperature fluctuations, for example by reducing the direct influence of incident solar radiation. Whilst the low-emissivity surface is exposed, it is not vulnerable to oxidation and corrosion in the manner of an aluminised coating. Nevertheless, the laminate is vapour permeable and can therefore help avoid condensation.

The outer layer of the laminate may advantageously have a moisture vapour transmission rate (MVTR) of at least 50 g/m².day, preferably at least 100 g/m².day, more preferably at least 200 g/m².day, even more preferably at least 500 g/m².day. Optionally, the outer layer of the laminate may have a moisture vapour permeability greater than 820 g/m².day. Moisture vapour permeability or moisture vapour transmission rate (MVTR) are provided throughout this specification based on testing with a Lyssy Model L80-5000 Water Vapor Permeability Tester at 100%/15% RH, i.e. 85% RH difference and 23 °C.

The low-emissivity surface may suitably have an emissivity of less than 0.5, preferably less than 0.3, more preferably less than 0.25 and most preferably less than 0.20. Emissivity expresses the amount of energy radiated by a material, matter or surface. An ideal material or surface emitting the highest theoretical level of radiant energy would have an emissivity, ε, of 1 and an ideal material or surface emitting no radiant energy would have an emissivity of 0. In practice all objects have an emissivity between 0 and 1. All emissivity values (ε) herein are given at a temperature of 25 °C.

Advantageously, to guard against rain and other environmental conditions it is envisaged that the outer layer be substantially air and liquid water impermeable. Suitably, the outer layer may have a hydrostatic head of at least 100 cm, preferably at least 500 cm.

The substrate of the outer layer may comprise any suitably liquid water impermeable, water vapour permeable and dimensionally stable layer capable of bearing the coating.

Advantageously, the substrate may comprise a membranous layer or a film. The substrate may in principle be fibrous or filamentous. However, advantageously, the substrate may comprise a monolithic (non-porous) or microporous film or membrane. The substrate may thus be non-fibrous.

The thickness of the substrate may vary as desired but may typically be in the range of from 5 to 400 µm, in particular in the range of from 20 to 200 µm.

The substrate may be a single-layer substrate or a multi-layer substrate. Multi-layer substrates may be formed, for example by coextrusion and/or lamination.

Conveniently, the substrate may be polymeric. Suitably, the substrate may comprise a synthetic organic polymer, in particular a polyolefin.

Optionally, the substrate comprises organic biopolymers such as one or more of suitable carbohydrates (starch, cellulose, glycogen, hemi-cellulose, chitin, fructans, inulin, lignin and/or pectin based materials), gums, proteins (animal or vegetable), colloids and hydrocolloids, polylactic, polygalactic and/or cellulose.

Provided the substrate retains the desired level of liquid water impermeability, the substrate may comprise micropores or microperforations to help provide moisture vapour permeability.

Optionally, the substrate comprises a microporous membrane. A microporous membrane is a three-dimensional matrix or lattice type structure that includes matrix of interconnecting pores extending through the microporous membrane.

As used herein, the term "microporous membrane" may include membranes having a mean pore size in the range of from about 0.05 µm to about 0.3 µm.

Suitably, the microporous membrane may have a thickness in the range of from 5 to 400 µm, in particular in the range of from 20 to 200 µm.

The substrate may comprise a polymeric, in particular polyolefinic, microporous membrane, in particular a microporous membrane comprising, substantially or wholly, polypropylene. The use of such materials is conveniently enabled by the coating, which provides protection for the substrate against incident solar radiation which might otherwise make it prone to rapid degradation.

Using a cellulose based substrate layer can significantly increase resistance to UV light exposure as compared to currently available products based on UV-stabilised polyolefin, in particular polypropylene. However, this has been found not to be necessary due to the protective effect of the coating.

The coating may be of any suitable thickness consistent with achieving a desired level of emissivity and/or moisture vapour permeability in the laminate. For optimal balance between low emissivity and moisture vapour permeability, the coating weight may preferably lie in the range from 0.8 g/m² to 2.5 g/m². Optionally, the thickness of the coating may be up to about 1.5 µm, in particular up to about 0.75 µm, such as up to about 0.5 µm. For example, the thickness may be in the range of from 0.1 µm to 0.75 µm.

The coating may be formed in any suitable manner, e.g. from a solvent or water based dispersion or solution, from a solvent-less system, or as an extrusion coating. The coating layer may be applied directly on the substrate, or there may be provided one or more intervening layers. The substrate may be primed or otherwise treated to aid adherence of the coating layer thereon.

The polymeric matrix of the coating may advantageously be substantially continuous and allow transfer of moisture vapour by molecular diffusion. Conveniently, the polymeric matrix and coating as a whole may be substantially liquid water impermeable.

The polymeric matrix of the coating layer may be composed of synthetic organic polymers (e.g. polyacrylic ester, polyvinyl acetate copolymers, polyurethanes, aliphatic polyamides such as nylon 6, nylon 6.6, nylon 4.6, polysulfone and polyethersulfone and the like), cellulose derivatives (e.g. ethers, esters, nitrocellulose, etc.), or modified or unmodified naturally occurring polymers (e.g. starches, proteins, etc.). Mixtures of these with or without the addition of inorganic additives (e.g. fumed silica) can also be used. However, it is generally preferred that such inorganic additives be substantially absent from the coating layer since such additives tend to increase the emissivity of the film.

Suitably, the polymeric matrix of the coating may comprise polymer chains having relatively high and relatively lower crystallinity sections to facilitate transfer of moisture vapour by molecular diffusion.

Optionally, the polymeric matrix of the coating comprises a block copolymer. The block copolymer may optionally be selected from styrene butadiene resins and hydrophilic polyurethanes including polyester urethanes, polyether urethanes, polycarbonate urethanes and polyurethane urea polymers, or combinations thereof.

Particularly preferred examples include styrene butadiene styrene resins and hydrophilic polyurethanes. Hydrophilic polyurethanes which may be used as preferred material for the binder are the reaction product of (a) polyisocyanates; and (b) polyols containing at least two isocyanate reactive groups; and (c) optionally an active hydrogen-containing chain extender.

Suitable polyisocyanates comprise aliphatic, cycloaliphatic, or aromatic polyisocyanates. As examples of suitable aliphatic diisocyanates, there may be mentioned 1,4-diisocyanatobutane, 1,6-diisocyanatohexane, 1,6-diisocyanato-2,2,4-trimethylhexane and 1,1,2-diisocyanatododecane, either alone or in admixture. Particularly suitable cycloaliphatic diisocyanates include 1,3- and 1,4-diisocyanatocyclohexane, 2,4-diisocyanato-1-methylcyclohexane, 1,3-diisocyanato-2-methylcyclohexane, 1-isocyanato-2-(isocyanatomethyl)cyclopentane, 1,1'-methylenebis[4-isocyanato-cyclohexane,1,1-(1-methylethylidene)bis(4-isocyanatocyclohexane), 5-isocyanato-1-isocyanatomethyl-1,3,3-trimethylcyclohexane(isophoronediisocyanate), 1,3- and 1,4-bis(isocyanatomethyl)cyclohexane,1,1-methylenebis[4-isocyanato-3-methylcyclohexane,1-isocyanato-4(or3)-isocvanatomethyl-1-methylcyclohexane], either alone or in admixture.

Particularly suitable aromatic diisocyanates include 1,4-diisocyanatobenzene, 1,1'-methylenebis[4-isocyanatobenzene], 2,4-diisocyanato-1-methylbenzene, 1,3-diisocyanato-2-methylbenzene, 1,5-diisocyanatonaphthalene, 1,1-(1 -methylethylidene)bis[4-isocyanatobenzene, 1,3- and 1,4-bis(1-isocyanato-1-methylethyl)benzene, either alone or in admixture. Aromatic polyisocyanates containing 3 or more isocyanate groups may also be used such as 1,1',1"-methylidynetris[4-isocyanatobenzene] and polyphenyl polymethylene polyisocyanates obtained by phosgenation of aniline/formaldehyde condensates.

The polyols containing at least two isocyanate reactive groups may be polyester polyols, polyether polyols, polycarbonate polyols, polyacetal polyols, polyesteramide polyols or polythioether polyols. The polyester polyols, polyether polyols and polycarbonate polyols are preferred.

Suitable polyester polyols which may be used include the hydroxyl-terminated reaction products of polyhydric, preferably dihydric alcohols (to which trihydric alcohols may be added) with polycarboxylic, preferably dicarboxylic acids or their corresponding carboxylic acid anhydrides. Polyester polyols obtained by the ring opening polymerization of lactones such as ε-caprolactone may also be included.

The polycarboxylic acids which may be used for the formation of these polyester polyols may be aliphatic, cycloaliphatic, aromatic and/or heterocyclic and they may be substituted (e.g. by halogen atoms) and saturated or unsaturated. As examples of aliphatic dicarboxylic acids, there may be mentioned, succinic acid, glutaric acid, adipic acid, suberic acid, azelaic acid, sebacic acid and dodecanedicarboxylic acid. As an example of a cycloaliphatic dicarboxylic acid, there may be mentioned hexahydrophthalic acid. Examples of aromatic dicarboxylic acids include isophthalic acid, terephthalic acid, ortho-phthalic acid, tetrachlorophthalic acids and 1,5-naphthalenedicarboxylic acid. Among the unsaturated aliphatic dicarboxylic acids which may be used, there may be mentioned fumaric acid, maleic acid, itaconic acid, citraconic acid, mesaconic acid and tetrahydrophthalic acid. Examples of tri- and tetracarboxylic acids include trimellitic acid, trimesic acid and pyromellitic acid.

The polyhydric alcohols which may be used for the preparation of the polyester polyols include ethylene glycol, propylene glycol, 1,3-propanediol, 1,3-butanediol, 1,4-butanediol, 1,5-pentanediol, 1,6-hexanediol, neopentyl glycol, diethylene glycol, dipropylene glycol, triethylene glycol, tetraethylene glycol, dibutylene glycol, 2-methyl-1,3-pentanediol, 2,2,4-trimethyl-1,3-pentanediol, 1,4-cyclohexanedimethanol, ethylene oxide adducts or propylene oxide adducts of bisphenol A or hydrogenated bisphenol A. Triols or tetraols such as trimethylolethane, trimethylolpropane, glycerine and pentaerythritol may also be used. These polyhydric alcohols are generally used to prepare the polyester polyols by polycondensation with the above mentioned polycarboxylic acids, but they can also be added as such to the reaction mixture.

Suitable polyether polyols include polyethylene glycols, polypropylene glycols and polytetraethylene glycols.

Suitable polycarbonate polyols which may be used include the reaction products of diols such as 1,3-propanediol, 1,4-butanediol, 1,6-hexanediol, diethylene glycol, triethylene glycol or tetraethylene glycol with phosgene, with diarylcarbonates such as diphenylcarbonate or with cyclic carbonates such as ethylene and/or propylene carbonate.

Suitable polyacetal polyols which may be used include those prepared by reacting glycols such as diethyleneglycol with formaldehyde. Suitable polyacetals may also be prepared by polymerizing cyclic acetals.

The active hydrogen-containing chain extender which may optionally be used is suitably an aliphatic, alicyclic, aromatic or heterocyclic primary or secondary polyamine having up to 80, preferably up to 12 carbon atoms, or water. In the latter case, a fully reacted polyurethane polymer is obtained with no residual free isocyanate groups.

Where the chain extension of the polyurethane prepolymer is effected with a polyamine, the total amount of polyamine should be calculated according to the amount of isocyanate groups present in the polyurethane prepolymer in order to obtain a fully reacted polyurethane urea polymer with no residual free isocyanate groups; the polyamine used in this case has an average functionality of 2 to 4, preferably 2 to 3.

The degree of non-linearity of polyurethane urea polymers controlled by the functionality of the polyamine used for the chain extension. The desired functionality can be achieved by mixing polyamines with different amine functionalities. For example, a functionality of 2.5 may be achieved by using equimolar mixtures of diamines and triamines.

Examples of such chain extenders useful herein include hydrazine, ethylene diamine, piperazine, diethylene triamine, triethylene tetramine, tetraethylene pentamine, pentaethylene hexamine, *N*,*N*,*N*-tris(2-aminoethyl)amine, *N*-(2-piperazinoethyl)ethylenediamine, *N*,*N*'-bis(2-aminoethyl)piperazine, *N*,*N*,*N*'-tris(2-aminoethyl)ethylenediamine, *N*-[*N*-(2-aminoethyl)-2-aminoethyl-*N*'-(2-aminoethyl)piperazine, *N*-(2-aminoethyl)-*N*'-(2piperazinoethyl)ethylene diamine, *N*,*N*-bis(2-aminoethyl)-*N*-(2-piperazinoethyl)amine, *N*,*N*-bis(2piperazinoethyl)amine, guanidine, melamine,*N*-(2-aminoethyl)-1,3-propanediamine, 3,3"-diaminobenzidine, 2,4,6-triaminopyrimidine, dipropylenetriamine, tetrapropylenepentamine, tripropylenetetramine, *N*,*N*-bis(6-aminohexyl)amine, *N*,*N*'-bis(3-aminopropyl)ethyienediamine, 2,4-bis(4'-aminobenzyl)aniline, 1,4-butanediamine,1,6-hexanediamine, 1,8-octanediamine,1,10-decanediamine, 2-methylpentamethylenediamine,1,12-dodecanediamine, isophorone diamine (or 1-amino-3-aminomethyl-3 '5,5-trimethylcyclohexane), bis(4aminocyclohexyl)methane (or bis(aminocyclohexane-4-yl)methane) and bis(4-amino-3-methylcyclohexyl)methane (or bis(amino-2-methylcyclohexane-4-yl)methane), polyethylene imines, polyoxyethylene amines and/or polyoxypropylene amines (e.g. Jeffamines from TEXACO).

The total amount of polyamines should be calculated according to the amount of isocyanate groups present in the polyurethane prepolymer. The ratio of isocyanate groups in the prepolymer to active hydrogen in the chain extender during the chain extension is in the range of from about 1.0:0.7 to about 1.0:1.1, preferably from about 1.0:0.9 to about 1.0:1.02 on an equivalent basis.

Preferably, the polyisocyanate is a diisocyanate and more preferably it is selected from 1,1'-methylenebis[4-isocyanatobenzene] and 1,1'-methylenebis[4-isocyanatocyclohexane].

Preferably the polyol is a polyethylene glycol selected from ethylene glycol, polyethylene glycol, polytetramethylene glycol and the like, eventually in admixture with other polyether polyols.

Preferably the chain extender is isophorone diamine (or 1-amino-3-aminomethyl-3,5,5,trimethylcyclohexane) alone or in admixture with hydrazine.

The reflective matter in the coating layer is preferably a dispersion of a pigment, such as a metal pigment or a pigment which presents a reflective metallic surface.

A wide range of metals may be used including, but not confined to, aluminium, bronze, stainless steel, brass, gold, nickel, silver, tin, copper or mixtures thereof. Alternatively mineral pigments such as glass or mica coated with reflective metal surfaces may be used. The reflective matter is preferably in a flake or platelet form.

The emissivity of the low emissivity layer for any particular reflective matter and coating is primarily dependent upon two variables: the amount of reflective matter present in the coating; and the thickness of the coating. Higher levels of reflective matter will give lower emissivities but increased cost, and above critical addition levels the matter may be insufficiently bound within the polymeric matrix.

Expressing the amount of reflective matter or pigment as a pigment to binder ratio, the pigment: binder ratio may be in the range from 3:1 to 1:10. The term "binder" is used to mean the dry or solvent-less polymer matrix forming the coating within which the pigment is dispersed. Coatings having lower pigment to binder ratios may still provide suitable low emissivity surfaces by increasing the coating layer weight per unit area which may preferably range from 0.8 g/m² to 2.5 g/m².

In order more readily to meet the strength requirements for cargo covers, the outer film layer is laminated to a support layer, i.e. a support layer having a strength which is greater than that of the substrate layer. The support layer may in particular have a greater tensile and/or tear strength than the outer layer.

The support layer may conveniently be laminated to the substrate by intermittent adhesive bonding.

The support layer may advantageously comprise a fabric, in particular a non-woven fabric. Optionally, the support layer comprises a polymeric spunbond, in particular a polypropylene spunbond. Suitably the spunbond has a basis weight in the range of from 10 to 100 g/m², in particular in the range of from 30 to 70 g/m².

Advantageously, the support may have one or more reflective or low emissivity surfaces.

Suitably, the support layer may comprise a highly reflective material, such as a pigment. Conveniently, the support layer may comprise a white pigment. Optionally, the support layer has a white outer surface with a light reflectivity in the visible range (400 - 700nm) of at least 70%, preferably at least 80% or even at least 90%.

Optionally, the support layer comprises a low-emissivity coating. Conveniently, the support layer may be metalised, preferably aluminised. Advantageously, the support layer may comprise a metalised or other low-emissivity coating on an inner surface, i.e. a surface facing towards cargo covered by the laminate in use.

To further enhance the thermal resistance of the insulation, the laminate may further comprise an insulation core comprising a fibrous wadding, the insulation core being sandwiched between the support layer and an inner convection barrier layer.

The fibrous wadding of the insulation core serves to entrap air, which is of course an excellent insulator provided that convection can be controlled. A suitable material for the wadding is, for example, polyethylene terephthalate (PET) fibre but a wide variety of materials may be used.

To counteract convection through the insulation core, the insulation core is sandwiched between the support layer and an inner convection barrier layer.

Advantageously, the insulation core may comprise a plurality of fibrous waddings interleaved with one or more internal convection barriers to restrict convection. Suitably the laminate may comprise two, three or four fibrous waddings interleaved with one, two or three convection barriers respectively.

It has been found that, in order to minimise convection within the insulation core, the (uncompressed) thickness of the or each fibrous wadding should be 15 mm or less, preferably 11 mm or less.

The inner convection barrier layer and any internal convection barriers may be of any suitable type to restrict mass movement of air. Advantageously, the convection barrier layer and/or any internal convection barriers may comprise a low-emissivity surface, e.g. a metallised or aluminised surface. Optionally, the inner convection barrier layer comprises a non-woven spunbond having a metallised low-emissivity surface facing the insulation core.

The inner convection barrier layer and any internal convection barriers may be adhesively attached to neighbouring fibrous waddings, e.g. loosely by spots of adhesive.

A flexible, vapour permeable cargo cover laminate may comprise a phase change material ("PCM"). Such materials can advantageously act as a temperature moderator. In particular, such materials can be used to store heat by causing a change in the "state" or "phase" of the materials, for example from a solid to a liquid.

By way of illustration, in a solid/liquid PCM, the heat applied to the PCM in a solid state is absorbed by the PCM resulting in an increase in the temperature of the PCM. As the temperature of the PCM reaches its phase change temperature, that is the temperature at which the PCM changes from a solid state to a liquid, the PCM stops increasing in temperature and substantially maintains a constant temperature at its phase change temperature, "consuming" the heat being applied thereto and storing it as latent heat. In reverse, as the PCM drops in temperature, the sensible heat which was consumed by the change to a liquid phase and stored as latent heat is released at the phase change temperature of the PCM as the PCM changes into its solid state. As before, the PCM maintains a substantially constant temperature at its phase change temperature while giving up the stored latent heat of liquification as it turns into its solid state.

Latent heat is the heat gained by a substance without any accompanying rise in temperature during a change of state. In essence, it is the amount of heat necessary to change a substance from one physical phase to another (more dis-ordered), for example, the solid state to the liquid state. Once the phase change material has completely changed to the more dis-ordered phase, for example a liquid state, the temperature of the PCM begins to rise again as the applied heat is now absorbed as sensible heat.

The PCM comprises material that will change phase in a temperature range between an anticipated minimum temperature of cargo and an anticipated maximum temperature to which the cargo is exposed.

Suitably, the PCM may change phase at a temperature in the range of from 0 to 35 °C, optionally in the range of from 2 to 30 °C. In an embodiment the PCM may change phase at a temperature in the range of from 10 to 30 °C, optionally in the range of from 15 to 25 °C. In another embodiment, the PCM may change phase at a temperature in the range of from 0 to 10 °C, optionally in the range of from 2 to 8 °C.

The PCM may be selected from inorganic PCM and organic PCM.

Non-limiting examples of PCM include calcium chloride hexahydrate, glauber salt, paraffin (such as n-Tetradecane (C-14), n-Hexadecane (C-16), and n-Octadecane (C-18), olefin, Na₂SO ₄.10H₂ O, CaCl₂.6H₂ O, NaHPO₄.12H₂ O, Na₂S ₂O₃.5H₂ O and NaCO₃.10H₂ O, and other materials compatible with the function and purpose disclosed herein. *Heat and Cold Storage with PCM,* Mehling, H; Cabeza, L.F, ISBN: 978-3-540-68556-2 provides information on various PCMs and phase change temperatures.

One example of an organic PCM with a phase change temperature of about 21 °C is CrodaTherm^{™} 21, available from Croda Industrial Chemicals.

To preserve the vapour permeability of the laminate, the PCM may be incorporated in a dispersed or intermittent manner. Suitably, the laminate may comprise a plurality of discrete amounts of PCM.

Suitably the laminate may comprise a PCM layer. Discrete amounts of PCM may be distributed, preferably substantially evenly, within the PCM layer. The PCM layer may optionally be adjacent the inner convection barrier layer.

The discrete amounts of PCM may, for example, be encapsulated in a liquid impermeable material, e.g. in a plurality of cells, and/or soaked into an absorbent material. The PCM layer may comprise a vapour permeable support layer bearing discrete amounts of PCM, for example in the form of discrete cells of PCM.

Additionally or alternatively the PCM may be applied to suitably absorbent fibres. Suitable fibres might be woven or nonwoven. The advantage of such a process would be that the layer retains much of its breathability, there being no need for vapour impermeable encapsulation. PCM could be applied by spraying onto the fibres or by dipping the fibres in a PCM solution. The fibres could be any synthetic or natural fibre able to absorb the PCM. By way of example, polyolefin fibres absorb PCM comprised of hydrocarbons, such as paraffin wax. The PCM layer may thus be a layer of absorbent fibres bearing PCM.

The vapour permeable laminate may comprise an overlap or overhang and/or an adhesive strip for affixing the laminate to a neighbouring laminate. Conveniently, an overhang may be formed by the outer layer.

The first and/or second flexible insulation laminate may optionally comprise a cargo cover laminate comprising an exposed low-emissivity surface and a convection-restricted insulation core.

Suitably the first and/or second flexible insulation laminate may optionally comprise a flexible, vapour impermeable cargo cover laminate comprising: a vapour impermeable outer layer comprising an exposed low-emissivity surface on an outward face of the outer layer; an inner convection barrier layer; and optionally an insulation core comprising a fibrous wadding, the insulation core being sandwiched between the outer and inner layers.

Such an impermeable laminate has the advantage that implementation of the exposed low-emissivity surface is greatly facilitated because this surface is not required to be vapour permeable. Compared to an exposed moisture vapour permeable low-emissivity surface, this may reduce costs, reduce the level of emissivity that are achievable, or both.

The low-emissivity surface may suitably have an emissivity of less than 0.5, preferably less than 0.2, more preferably less than 0.1 and most preferably less than 0.05.

Conveniently, the outer layer of the vapour impermeable laminate may comprise a metallic or metallised film. Optionally, the outer layer of the vapour impermeable laminate may be laminated to a support layer, for example a nonwoven fabric.

Suitably, the inner convection barrier layer and any internal convection barriers may be as described above in respect of the vapour permeable laminate.

The insulation core may be as described in respect of the vapour permeable laminate. For example the insulation core may comprise a plurality of fibrous waddings interleaved with one or more internal convection barriers to restrict convection. Suitably the laminate may comprise two, three or four fibrous waddings. The (uncompressed) thickness of the or each fibrous wadding may advantageously be 15 mm or less, preferably 11 mm or less.

A vapour impermeable laminate may comprise a phase change material ("PCM"). The PCM may be as described hereinabove in respect of the vapour permeable laminate.

The vapour impermeable laminate may comprise a PCM layer. The PCM layer may comprise discrete or intermittent amounts of PCM as described above in respect of the vapour permeable laminate. Alternatively, since vapour permeability is not of concern in the vapour impermeable laminate, the PCM layer of the impermeable laminate may comprise a continuous layer of PCM, for example a continuous, liquid impermeable cell containing PCM.

The vapour impermeable laminate may comprise an overlap or overhang and/or an adhesive strip for affixing the laminate to a neighbouring laminate. Conveniently, an overhang may be formed by the outer layer.

There are also disclosed herein methods of making cargo covers.

There is envisaged herein a method of making a cargo cover for covering a cargo, for example a cargo cover according to an aspect or embodiment of the invention, the method comprising the steps of: forming a first flexible insulation laminate for covering a first part of the cargo, the first laminate comprising a first arrangement of layers; forming a second flexible insulation laminate for covering a second part of the cargo, the second laminate comprising a second arrangement of layers which is different from the first arrangement of layers; and joining the first laminate to the second laminate.

Optionally, the step of forming the first and/or second flexible insulation laminate may comprise forming a hollow tube from a sheet of flexible insulation laminate. The hollow tube may, for example, be formed by wrapping the sheet of flexible insulation laminate around a former. In such versions, the sheet of flexible insulation laminate is suitably longer in length than the perimeter of the former, so that when the flexible insulation laminate is wrapped around the former, a portion of the flexible insulation laminate overlaps. The flexible insulation laminate may be adhered to itself along the overlapping portion, for example using double sided tape or an adhesive.

The method may comprise the step of applying a layer of PCM to one or more sides of the first and/or second flexible laminate. The PCM layer may comprise discrete or intermittent amounts of PCM. Alternatively, the PCM layer may comprise a continuous layer of PCM covering a portion or the whole of the one or more sides of the first and/or second flexible laminate. When the method is used in relation to the invention, the first flexible insulation laminate comprises the PCM layer. That is, the PCM layer may be arranged to cover the first part of the cargo. The second flexible insulation laminate may include substantially no PCM layer. That is, the PCM layer may be comprised in the first flexible insulation laminate only, to optionally cover the first part of the cargo, which may comprise a top of the cargo.

Where the method involves the applying a layer of PCM to one or more sides of the first and/or second flexible laminate, the method may also comprise the step of forming a third flexible insulation laminate covering the PCM layer. The third flexible insulation laminate may advantageously be made from the same material as the first and/or second flexible insulation laminates. Thus the PCM layer may conveniently be sandwiched between first and/or second flexible insulation laminates and the third flexible insulation laminates.

In the invention the phase change material layer includes a flexible insulation material comprising a flexible porous medium defining a pore volume, and a phase change material (PCM) within the pore volume. Such an arrangement can mitigate or prevent pooling of the PCM. Moreover, such an arrangement may allow for flexing of the phase change material layer when the phase change material is in a solid state. This provides an advantage over known arrangements in which flexing of a PCM material in a solid state is not possible.

Given that, in aspects of the invention, the phase change material layer includes a flexible insulation material the following features may apply to the phase change material layer.

The insulation material may be flexible in the sense that it has at least some ability to flex or bend. Different degrees of flexibility may be desirable for different applications.

Advantageously, in various embodiments, the flexible insulation material may be capable of bending under its own weight. A suitable method for determining whether a material can bend under its own weight is the Pierce cantilever test ASTM D1388.

In the Pierce cantilever test a specimen of the material to be tested is cut to 200 mm x 25 mm. The sample is then gradually slid over the edge of a platform of a Pierce cantilever device. As the leading edge of the specimen projects from the platform, it may bend under its own weight, until the leading edge of the specimen makes contact with a sloping surface of the device angled downwards at an angle θ = 41.5°. The overhanging length (I) of the specimen is measured using a graduated ruler. The measured length (I) is multiplied by a scaling factor to give a value for the bending stiffness (G) in Nm.

For the purposes of the present specification, a material can bend under its own weight if a leading edge of the material makes contact with the sloping surface in the Pierce cantilever test.

The insulation material may be flexible only in a certain state of the PCM. For example, the insulation material may be flexible, or even bend under its own weight, only when the PCM is in a liquid state.

Advantageously, it has been found in various embodiments of the invention that incorporation of the PCM into the pore volume of the porous medium may allow for flexing where the PCM is in a solid state and would otherwise break.

Advantageously, the insulation material may be flexible in all states of the PCM. For example, the insulation material may be flexible when the PCM is in a liquid state and when the PCM is in a solid state. Typically, different degrees of flexibility will be achieved in different PCM states. For example, the insulation material may bend under its own weight in the sense of the Pierce cantilever test when the PCM is in a liquid state and have a lower degree of flexibility when the PCM is in the solid state.

To enhance flexibility the PCM may advantageously fill only part of the pore volume, with a remaining part of the pore volume comprising air. In various embodiments, the phase change material may fill in the range of from 50 to 95% of the pore volume, in particular in the range of from 40 to 90% of the pore volume, such as in the range of from 50 to 85% of the pore volume. Optionally the remainder of the pore volume may be filled with air.

Suitably, to preserve air in the pore volume, the insulation material may be substantially uncompressed.

Conveniently, the insulation material may be air and/or vapour permeable. This may be of benefit, for example, where there is a desire to minimise condensation. It has been found that an air-open insulation material in which only part of the pore volume is filled by PCM can provide for both advantageous flexibility and permeability.

The insulation material may show air permeability in the sense that when the insulation material is subjected to a hydrostatic head of water and an air pressure in the region of 9 to 13 kPa is applied to the underside, bubbles can be seen in the water above the insulation material.

The porous medium may optionally comprise a layer. Suitably, the layer may have a thickness in the range of from 0.5 to 20 mm, such as in the range of from 1 to 5, e.g. in the range of from 1.5 to 3 mm.

Optionally, the porous medium may have a density (basis weight) greater than about 190 g/m², or of greater than about 200 g/m², or of greater than about 250 g/m², or of greater than about 270 g/m². The porous medium may have a density in the range of from 100 g/m² to 2500 g/m², such as in the range of from 100 g/m² to 2000 g/m², or in the range of from 150 g/m² to 1500 g/m², or in the range of from 150 g/m² to 1000 g/m², or in the range of from 150 g/m² to 750 g/m², or in the range of from 190 g/m² to 500 g/m², or in the range of from 190 g/m² to 350 g/m², or in the range of from 200 g/m² to 300 g/m², or in the range of from 250 g/m² to 300 g/m².

Advantageously, the porous medium may comprise fibres. To enhance absorption capacity, the fibres of the porous medium may have a relatively small diameter. Suitably the mean fibre diameter of the fibres may be the range of from 1 to 10 µm, or in the range of from 1 to 8 µm, or in the range of from 1 to 4 µm, or in the range of from 1 to 3 µm, for example such as about 1 µm, or about 2 µm, or about 3 µm.

The amount of phase change material able to be absorbed and held within a fibrous porous medium is dependent on the total fibre surface area, which in turn is dependent on the mean fibre diameter of the fibres and the density of the porous medium. The greater the total fibre surface area, the greater the amount of phase change material that can held within the fibrous porous medium.

The porous medium may in principle be made of any suitable material but may conveniently comprise a synthetic material. Conveniently, the porous medium may be polymeric, i.e. comprise or consist of one or more polymers (or copolymers).

In various embodiments, the porous medium comprises a polyolefin, optionally polypropylene.

Suitably, the porous medium may comprise a non-woven material. A variety of such materials are known. In various embodiments, melt-blown material has been found to provide particularly effective absorption of PCMs.

The PCM may be of any suitable type. A wide range of PCMs are known in the art. Such materials can advantageously act as a temperature moderator. In particular, such materials can be used to store heat by causing a change in the "state" or "phase" of the materials, for example from a solid to a liquid.

By way of illustration, in a solid/liquid PCM, the heat applied to the PCM in a solid state is absorbed by the PCM resulting in an increase in the temperature of the PCM. As the temperature of the PCM reaches its phase change temperature, that is the temperature at which the PCM changes from a solid state to a liquid, the PCM stops increasing in temperature and substantially maintains a constant temperature at its phase change temperature, "consuming" the heat being applied thereto and storing it as latent heat. In reverse, as the PCM drops in temperature, the sensible heat which was consumed by the change to a liquid phase and stored as latent heat is released at the phase change temperature of the PCM as the PCM changes into its solid state. As before, the PCM maintains a substantially constant temperature at its phase change temperature while giving up the stored latent heat of liquification as it turns into its solid state.

Latent heat is the heat gained by a substance without any accompanying rise in temperature during a change of state. In essence, it is the amount of heat necessary to change a substance from one physical phase to another (more dis-ordered), for example, the solid state to the liquid state. Once the phase change material has completely changed to the more dis-ordered phase, for example a liquid state, the temperature of the PCM begins to rise again as the applied heat is now absorbed as sensible heat.

In various embodiments of the invention, the PCM is organic. However, inorganic PCMs are also known and could suitably be used.

An organic PCM may, for example, comprise paraffin or a paraffin-derived hydrocarbon, a carbohydrate, a lipid, or a mixture thereof. Non-limiting examples of organic PCMs include n-tetradecane (C-14), n-hexadecane (C-16), and n-octadecane (C-18) and olefin.

Alternatively or additionally, the PCM may comprise an inorganic PCM such as an inorganic salt hydrate or eutectic material. Non-limiting examples of inorganic PCMs include calcium chloride hexahydrate, glauber salt, Na₂SO₄.10H₂O, CaCl₂.6H₂O, NaHPO₄.12H₂O, Na₂S₂O₃.5H₂O and NaCO₃.10H₂₀O. *Heat and Cold Storage with PCM,* Mehling, H; Cabeza, L.F, ISBN: 978-3-540-68556-2 provides information on various PCMs and phase change temperatures.

In various embodiments, the PCM is hydrophobic. For example, the PCM may comprise compounds having carbon chains of at least eight, ten or twelve carbon atoms.

One example of an organic, hydrophobic PCM with a phase change temperature of about 21 °C is CrodaTherm^{™} 21, available from Croda Industrial Chemicals.

The PCM comprises material that will change phase in a temperature range between an anticipated minimum temperature and an anticipated maximum temperature to be controlled by the insulation material. The phase change is between solid and liquid.

Suitably, the PCM may change phase at a temperature in the range of from -10 to 60 °C, optionally in the range of from 2 to 30 °C. In an embodiment the PCM may change phase at a temperature in the range of from 10 to 30 °C, optionally in the range of from 15 to 25 °C. In another embodiment, the PCM may change phase at a temperature in the range of from 0 to 10 °C, optionally in the range of from 2 to 8 °C.

Suitably the insulation material may constitute a PCM layer. Discrete amounts of PCM may be distributed, preferably substantially evenly, within a PCM layer.

Suitably, the PCM layer may have a thickness in the range of from 0.5 to 10 mm, such as in the range of from 1 to 5 mm, e.g. in the range of from 1.5. to 3 mm. Suitably, the insulation material may be presented as a sheet or a roll.

The flexible insulation material may be laminated with one or more supplementary layers to form an insulation laminate.

The supplementary layers, and indeed the insulation laminate as a whole, may advantageously be flexible, at least when the PCM is in a liquid state and optionally also when the PCM is in a solid state. Optionally, the insulation laminate may bend under its own weight in the sense of the Pierce test cited hereinabove.

Advantageously, the flexible insulation material may be sandwiched between first and second supplementary layers. Conveniently, the flexible insulation material may be surrounded by said one or more layers. This can assist in containing the PCM. Advantageously, the flexible insulation material may be encapsulated by the one or more supplementary layers. For example, the laminate may take the form of a pouch containing the flexible insulation material.

The one or more supplementary layers may comprise a barrier layer for resisting penetration of the PCM from the flexible insulation material layer out of the insulation laminate. A barrier layer may suitably comprise a monolithic or microporous film. Examples of monolithic films include cellulose, polyamide and ethylene vinyl alcohol, but a range of suitable films will be apparent to the skilled person.

To enhance insulation performance, the one or more supplementary layers may advantageously comprise a reflective layer having an emissivity of less than 0.5, preferably less than 0.3, more preferably less than 0.25 and most preferably less than 0.20. Suitably, such a reflective layer may comprise an outward-facing reflective surface that is exposed.

Optionally, a reflective layer may be vapour permeable, comprising a vapour permeable substrate bearing a coating having particles of infra-red reflective matter dispersed within a polymeric matrix and providing an exposed low-emissivity surface on an outward face of the reflective layer. Such vapour permeable reflective layers are described in WO 2009/024804.

The one or more supplementary layers may comprise a support layer. A support layer may, for example, comprise a fibrous woven or non-woven material. Suitably, a spunbond layer may be used as a support layer.

A support layer may suitably be laminated, e.g. by intermittent heat or adhesive bonding, to a barrier layer or reflective layer as described herein. Typically a support layer has a greater tensile and/or tear strength than the layer to which it is laminated.

Optionally, the one or more supplementary layers may comprise one or more air and/or vapour permeable layers. In particular, the one or more air and/or vapour permeable layers may have a moisture vapour transmission rate (MVTR) of at least 100 g/m².24hr, e.g. at least 200 g/m².24hr, or even at least 500 g/m².24hr as determined using a Lyssy Model L80-5000 Water Vapor Permeability Tester at 100%/15% RH, i.e. 85% RH difference and 23 °C.

Optionally, the MVTR may be at most 2000 g/m².24hr, e.g. at most 1500 g/m².24hr, or even at most 1000 g/m².24hr as determined using the aforementioned method.

Advantageously, the laminate may be air and/or vapour permeable. The laminate may, for example, have a moisture vapour transmission rate (MVTR) of at least 100 g/m².24hr, e.g. at least 200 g/m².24hr, or even at least 500 g/m².24hr as determined using a Lyssy Model L80-5000 Water Vapor Permeability Tester at 100%/15% RH, i.e. 85% RH difference and 23 °C. Optionally, the MVTR may be at most 2000 g/m².24hr, e.g. at most 1500 g/m².24hr, or even at most 1000 g/m².24hr as determined using the aforementioned method.

To contain the insulation material, one or more layers of the laminate may be sealed at one or more side edges of the laminate. The layers may be sealed at all edges of the laminate. A sealed pouch of the insulation material may advantageously be provided.

Optionally, at least one of the one or more layers of the insulation laminate may comprise a thermosetting polymer. Advantageously, this can allow the one or more layers to be heat sealed together to form seams.

Suitably, the insulation laminate may be presented as a sheet or a roll.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the invention will now be described, by way of example only, with reference to the accompanying drawings, in which:
Figure 1 is a schematic sectional view of a cargo cover laminate not in accordance with the invention but described for illustration;
Figure 2 is a schematic sectional view of a cargo cover laminate not in accordance with the invention but described for illustration;
Figure 3 is a schematic sectional view of a cargo cover laminate not in accordance with the invention but described for illustration;
Figure 4 is a schematic sectional view of a cargo cover laminate not in accordance with the invention but described for illustration;
Figure 5 is a schematic sectional view of a cargo cover laminate not in accordance with the invention but described for illustration;
Figure 5A is a schematic sectional view of an optional PCM layer which may be added to the laminates of Figures 1 to 5;
Figure 6A is a schematic plan view of a cargo cover top laminate of a cargo cover not in accordance with the invention but described for illustration;
Figure 6B is a perspective bottom view of a cargo cover side laminate of a cargo cover not in accordance with the invention but described for illustration;
Figure 6C is a schematic plan view of a base laminate of a cargo cover not in accordance with the invention but described for illustration;
Figure 7 is a schematic side sectional view of a cargo cover not in accordance with the invention but described for illustration; and
Figures 8A to 8M illustrate a method of assembling a cargo cover having four sides, a top comprising a PCM, and a bottom opening for receiving cargo, in accordance with an embodiment of the invention.

### DETAILED DESCRIPTION

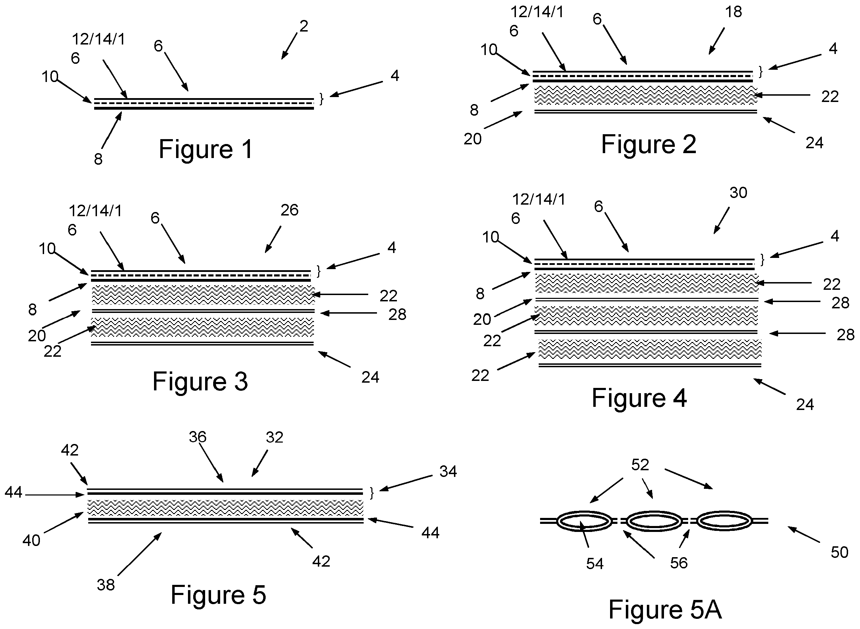

Referring firstly to Figure 1, a first flexible, vapour permeable cargo cover laminate 2 comprises an outer layer 4 having an exposed low-emissivity surface 6 on an outward face of the outer layer 4; and a support layer 8 laminated to an inward face of the outer layer.

The outer layer 4 is liquid water impermeable but water vapour permeable, comprising a substrate 10 bearing a coating 12 having particles of infra-red reflective matter 14 dispersed within a polymeric 16 matrix to provide the low-emissivity surface

The substrate of the outer layer is a microporous polypropylene film (ex Lensing) having a thickness of about 30 µm. The coating comprises a polymer matrix formed of a hydrophilic, breathable polyurethane, specifically a solvent-based aliphatic polyurethane.

Dispersed within the polymer matrix are particles of infra-red reflective matter, specifically aluminium platelets or "Silver dollar" grade aluminium with a particle diameter from about 2 µm to about 50 µm.

The particle to matrix ratio within the coating is approximately 1 and the coating has been applied to the substrate by gravure coating.

The coating is applied to an exposed outer side of the substrate and provides an emissivity of about 0.16. The MVTR of the outer layer is about 170 g/m².day.

The support layer is a white polypropylene spunbond with a weight of about 50 g/m² and an aluminised side facing away from the outer layer. The support layer is adhesively bonded to an inner side of the substrate, opposed to the outer side bearing the coating. To preserve the vapour permeability of the laminate, the bonding is intermittent.

The MVTR of the laminate as a whole is about 70 g/m².day.

Referring now to Figure 2, a second flexible, vapour permeable cargo cover laminate 18 comprises an outer layer as described in respect of the laminate of Figure 1 (save that the support layer is non-aluminised) an insulation core 20 comprising a fibrous PET wadding 22, and an inner convection barrier layer 24. Like reference numerals are used for like parts.

The fibrous PET wadding has a weight of about 190 g/m² and a thickness of about 11 mm. The fibrous wadding is bonded by spots of adhesive to the support layer and the inner convection barrier layer. In this manner the outer layer and the inner convection barrier layer sandwich the insulation core.

The inner convection barrier layer is a white polypropylene spunbond with a weight of about 50 g/m² and an exposed, inner aluminised side facing away from the wadding.

The second laminate has an R value of about 0.3 m².K/W.

Referring now to Figure 3, a third flexible, vapour permeable cargo cover 26 laminate is identical to the laminate of Figure 2 save that the insulation core comprises first and second ones of the fibrous PET waddings separated by an internal convection barrier 28. The convection barrier is a white polypropylene spunbond with a weight of about 50 g/m², aluminised on one side.

The third laminate has an R value of about 0.6 m².K/W.

Referring now to Figure 4, a fourth flexible, vapour permeable cargo cover 30 laminate is identical to the laminate of Figure 3 save that the insulation core comprises first, second and third ones of the fibrous PET waddings, separated by two of the internal convection barriers, and in that the substrate of the outer layer comprises a cellulose acetate film having a thickness of about 20 µm adhesively laminated to a 50g/m² black PP spunbond.

The third laminate has an R value of about 0.9 m².K/W.

Referring now to Figure 5, a fifth vapour impermeable flexible laminate for insulating cargo 32 comprises a vapour impermeable outer layer 34 having an exposed low-emissivity surface 36 on an outward face; an inner convection barrier layer 38; and an insulation core 40 comprising a fibrous wadding sandwiched between the outer and inner layers.

The outer layer is liquid water and vapour impermeable comprising an aluminised cast polypropylene film 42 adhesively laminated to a 40 g/m² polypropylene spunbond 44. The aluminised film is on the outer side of the laminate and presents a low emissivity surface providing an emissivity of equal to or less than 0.05.

The inner convection barrier layer is identical to the outer layer, comprising an aluminised cast polypropylene film adhesively laminated to a 40 g/m² polypropylene spunbond. The spunbond lies between the aluminised film and the wadding.

The fifth laminate has an R value of about 0.3 m².K/W and is vapour impermeable.

Each of the first to fifth laminates may optionally be modified to include a phase change material (PCM) layer. With reference to Figure 5A, one suitable phase change material layer 50 comprises two polymeric sheets joined in such a way as to create cells 52 containing PCM 54 in a liquid state so that the PCM 54 does not move from its location. To provide for vapour permeability, the sheets of the PCM layer comprise a plurality of micro-perforations 56 between the cells 52 containing PCM 54. In other versions the PCM layer may be provided in a continuous layer, without cells 52.

In the first to fourth laminates, the PCM layer 50 can, for example, replace one of the convection inhibiting layers 28, or form an additional layer between a fibrous wadding 22 and the inner convection barrier layer 24 or an internal convection barrier layer 28.

In the fifth laminate, the PCM layer 50 can, for example, form an additional layer between the insulation core 40 and the inner layer 38. As the fifth laminate is vapour impermeable, the PCM layer 50 is not required to comprise micro-perforations.

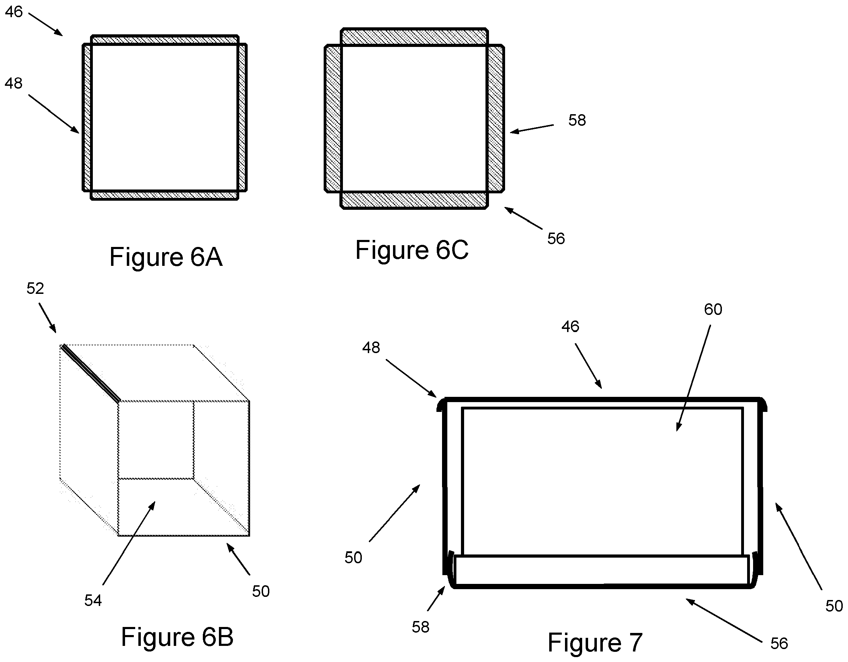

Referring now to Figures 6A to 6C and Figure 7, the laminates of Figures 1 to 5 (without any PCM layer 50) were incorporated into a range of cargo covers.

With reference to Figure 6A, the cargo covers each comprised a top laminate 46 which was generally square in plan with overhangs 48 of the outer layer at its boundary.

With reference to Figure 6B, the cargo covers each comprised a side laminate 50 which was generally oblong in plan, joined at two short ends along a seam 52 and creased to form a wrap structure defining a cavity 54 for receiving a pallet of cargo.

With reference to Figure 6C, an insulation base 56 was optionally provided for use with some cargo covers. The insulation base was generally square in plan with overhangs 58 of the outer layer at its boundary.

With reference to Figure 7 the cargo covers were fully assembled by taping the top laminate 46 to the side laminate 50 with double-adhesive tape along the overhang 48. Thereafter, a pallet of cargo 60 was covered with the covers. Where an insulation base 56 was used, this was placed under the pallet side laminate taped over the top of the overhang 58 of the base.

Each cargo cover was tested in finished cover form by placing it over a pallet of boxes of known average bulk density and then determining the time taken for the contents of the pallet boxes to increase in temperature from a defined start temperature to a defined higher finish temperature, the start and finish temperatures being those accepted by the industry users i.e. the end customers responsible for manufacturing and shipping the goods.

The pallet was built up with plastic bottles containing water for higher density testing (target density 0.2 kg/m³) as follows:
- Standard Euro pallet (1.2m × 0.8m)
- 24 Double skin cardboard boxes used per pallet (Dimensions L400mm x W400mm x H300mm)
- Pallet was built in layers of 6 Boxes (3x2) to a height of 4 boxes
- Each box contained 12x500ml bottles of water

The test pallet was fitted with temperature probes to give temperature readings at key positions inside the boxes from the bottom to the top of the pallet. Measurements were made at the top corner, top centre and bottom corner of the pallet.

The temperature probes were connected to data loggers to record the temperatures at frequent intervals throughout the test procedure. The cargo cover to be tested was fitted over the test pallet and the whole (wooden pallet base, boxes plus temperature probes, cargo cover) placed in a controlled temperature conditioning chamber to achieve a target start temperature for the test (in this case, 18 °C ±1.0 °C). Once the target start temperature has been achieved, the covered test pallet is moved quickly into a heated test chamber set at 45 °C. The temperatures at the various positions within the palletised boxes were then monitored and the times to achieve a temperature increases from 18 °C to 25 °C were measured.

Table 1 provides details of cargo covers that were made in this manner from the laminates of Figures 1 to 5, as well as the results of the tests (where available). These cargo covers are not in accordance with the invention but described for illustration.

**Table 1**

| **Cargo Cover** | **Top laminate** | **Side laminate** | **Base laminate** | **Top Corner Time to 25 °C (mins:sec)** | **Top Centre Time to 25 °C (mins:sec)** | **Bottom corner Time to 25 °C (mins:sec)** |
|---|---|---|---|---|---|---|
| Ex 1 | Figure 1 | Figure 1 | Figure 3 | - | - | - |
| Ex 2 | Figure 2 | Figure 2 | Figure 3 | 06:43 | 06:41 | 09:25 |
| Ex 3 | Figure 3 | Figure 3 | Figure 3 | 07:49 | 08:58 | 09:18 |
| Ex 4 | Figure 1 | Figure 1 | none | - | - | - |
| Ex 5 | Figure 2 | Figure 2 | none | 05:51 | 06:23 | 05:54 |
| Ex 6 | Figure 3 | Figure 3 | none | 06:38 | 05:52 | 05:00 |
| Ex 7 | Figure 4 | Figure 5 | Figure 5 | 07:03 | 09:07 | 09:55 |
| Ex 8 | Figure 5 | Figure 5 | Figure 5 | 06:02 | 06:08 | 08:16 |

These results demonstrate that cargo covers are effective in protecting cargo from environmental temperature variations for several minutes.

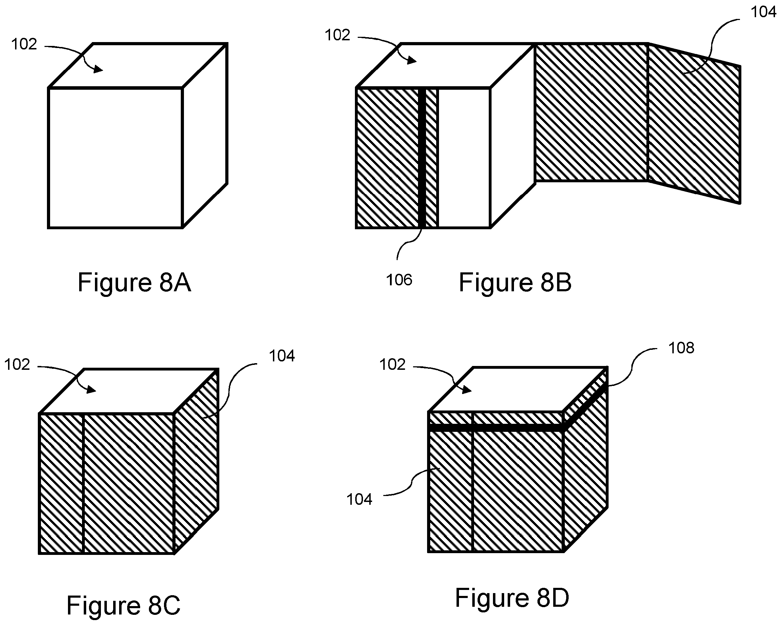

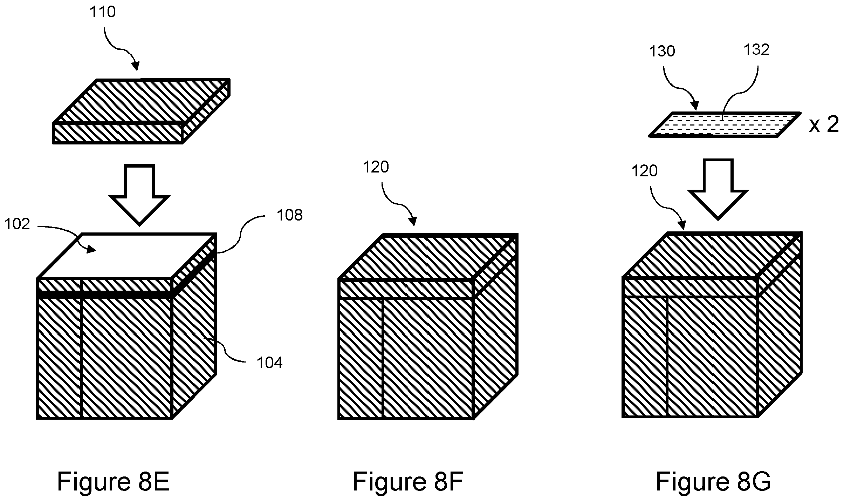

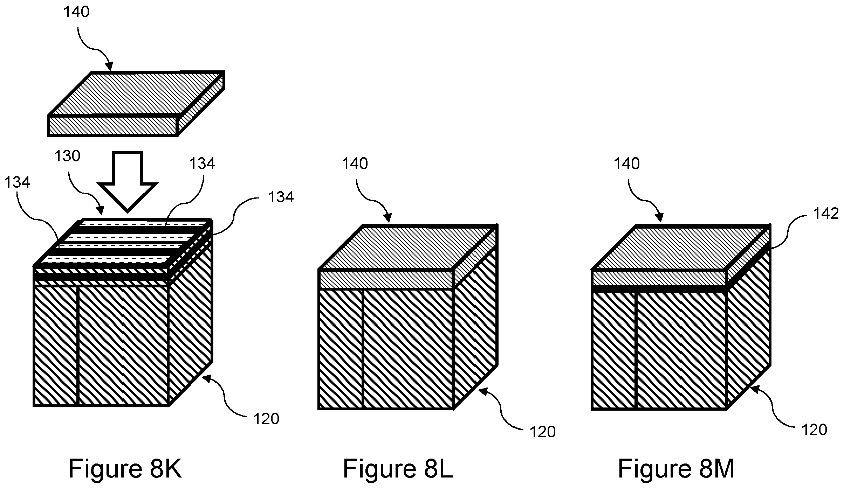

Referring now to Figures 8A to 8M, a method of assembling a cargo cover having four sides, a top comprising a PCM, and a bottom opening for receiving cargo 100 uses a former 102. As shown in Figure 8A, the former 102 is cube shaped. However, it may be alternatively be rectangular prism or any other suitable shape. The former 102 may be made of any suitable material, for example such as wood, metal or plastic.

Referring to Figures 8B and 8C, a sheet of material - in this embodiment a cargo cover laminate, such as any of the vapour permeable or impermeable cargo cover laminates described herein - is wrapped around the former 102 to form a wall 104, which is sealed to itself using double sided tape 106 to provide a cube shaped body with four closed sides and two open sides on opposing faces.

Double sided tape 108 is wound around the top of the wall 104 as shown in Figure 8D, and a first top cover 110 placed over the top of the wall 104 to obscure one of the open sides, and attached in place with the double sided tape 108. The former 102 is then removed to leave behind a cube shaped cargo cover 120, having five closed faces (four sides, and a top face) and an open face comprising a bottom opening for receiving cargo as shown in Figure 8F. Alternatively, adhesives may be used instead of double sided tape 108, and may be applied to the first top cover 110 and/or the wall 104.

In some embodiments, the former 102 may be removed once the wall 104 is formed in Figure 8C, or once the double sided tape has been 108 has been wound around the top of the wall 104 in Figure 8D, prior to the first top cover 110 being placed over the top of the wall 104 and attached in place with the double sided tape 108.

The first top cover 110 is assembled to form a rectangular sheet of material - in this embodiment a cargo cover laminate such as any of the vapour permeable or impermeable cargo cover laminates described herein - approximately 100 mm longer and wider than the top of the former 102. At each corner of the rectangular sheet, 50 mm cuts are made into the sheet, to allow corners to be formed to a depth of 50 mm. This creates a 50 mm upstand around the perimeter of first top cover 110, which can wrap around and attach to the double sided tape 108 at the top of wall 104. This allows the first top cover 110 to be attached to the top of wall 104 to form cube shaped cargo cover 120.

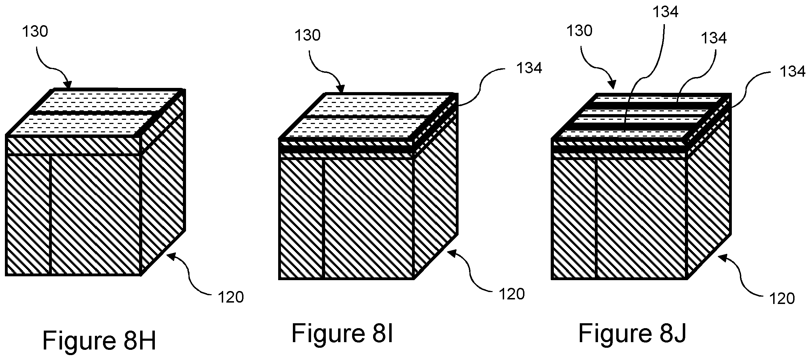

Referring to Figure 8G, two pouches 130 filled with PCM 132 are placed side by side on an outer surface of the first top cover 110 (i.e. over the top of cube shaped cargo cover 120) as shown in Figure 8H. Each pouch is in the form of a strip, which may be continuous or comprise discrete packages of PCM. The two PCM pouches 130 are arranged in parallel, so that together they completely obscure the upper face of the cargo cover 120 (i.e. the upper surface of the first top cover 110). The pouches 130 are arranged such that gaps therebetween are minimised to reduce the risk of thermal bypass of the PCM 132. The pouches 130 may in some embodiments extend beyond the upper face of the cargo cover 120 and bend so that they also extend partially over one or more of the sides of the wall 104. Additional adhesive may be used to further secure the two pouches 130 to the top of cube shaped cargo cover 120 and/or to the sides of the wall 104. The PCM 132 may be in the form of a gel or liquid, for example, but in this embodiment is held within the pores of a flexible porous medium such as a melt-blown polypropylene fibre wadding.

Double sided tape 134 is then wound around the top of the walls of cube shaped cargo cover 120 as shown in Figure 8I and optionally also over the pouches 130 as shown in Figure 8J. A second top cover 140 is placed over the top of the pouches 130 and attached in place with the double sided tape 134 as shown in Figures 8K and 8L. Alternatively, adhesives may be used instead of double sided tape 134. The second top cover 140 may constructed in the same way as the first top cover 110, as described above. The second top cover protects the PCM pouches 130 and provides an aesthetically pleasing finish.

Finally, a finishing tape 142, which can be made of cargo cover laminate with a layer of adhesive on one side, is adhered to the join between the second top cover 140 and the cube shaped cargo cover 120, to form the cargo cover having four sides, a top comprising a PCM and a bottom opening for receiving cargo 100. The finishing tape 142 provides an airtight and more aesthetically pleasing finish.

## Claims

1. A cargo cover comprising:
a first flexible insulation laminate for covering a first part of the cargo, the first laminate comprising a first arrangement of layers; and
a second flexible insulation laminate for covering a second part of the cargo, the second laminate comprising a second arrangement of layers which is different from the first arrangement of layers,
the first laminate being joined to, or arranged to be joined to, the second laminate
wherein the first insulation laminate of the cargo cover comprises a phase change material layer including a flexible insulation material comprising a flexible porous medium defining a pore volume, and a solid/liquid phase change material (PCM) within the pore volume.

2. The cargo cover of claim 1 comprising one or more further flexible insulation laminates for covering one or more further parts of the cargo, said one or more further laminates comprising further arrangements of layers different from the first and second arrangements of layers and being joined to, or arranged to be joined to, at least one of the first and second laminates.

3. The cargo cover of claim 1 or claim 2 comprising a plurality of first laminates and/or a plurality of second laminates.

4. The cargo cover of any preceding claim, wherein the first and/or second laminate comprises:
a flexible, vapour permeable cargo cover laminate comprising:
an outer layer comprising a substrate bearing a coating, the coating having particles of infra-red reflective matter dispersed within a polymeric matrix and providing an exposed low-emissivity surface on an outward face of the outer layer; and
a support layer laminated to an inward face of the outer layer; or
a flexible vapour impermeable cargo cover laminate comprising:
a vapour impermeable outer layer comprising an exposed low-emissivity surface on an outward face of the outer layer;
an inner convection barrier layer; and
an insulation core comprising a fibrous wadding, the insulation core being sandwiched between the outer and inner layers.

5. The cargo cover of any preceding claim, wherein the first flexible insulation laminate is arranged to cover a top of the cargo and the second flexible insulation laminate is arranged to cover a side of the cargo.

6. The cargo cover of any preceding claim, wherein the first flexible insulation laminate has a higher thermal resistance than the second flexible insulation laminate.

7. The cargo cover of any preceding claim having a box-shaped configuration defining a cavity for receiving a pallet of cargo.

8. The cargo cover of any preceding claim, wherein the phase change material fills in the range of from 50 to 95% of the pore volume.

9. The cargo cover of any preceding claim, wherein the porous medium comprises fibres.

10. The cargo cover of any preceding claim, wherein the porous medium comprises a non-woven material, optionally a melt-blown material.

11. The cargo cover of any preceding claim, wherein the PCM is organic, optionally comprising a compound having a carbon chain of at least eight carbon atoms.

12. The cargo cover of any preceding claim, wherein the PCM changes phase at a temperature in the range of from 2 to 30 °C.

13. The cargo cover of any preceding claim, wherein the PCM layer has a thickness in the range of from 0.5 to 10 mm.

14. A method of insulating cargo, the method comprising covering the cargo with a cargo cover according to any preceding claim.

15. The method of claim 14, wherein the cargo has a target temperature in the range of from 15 to 25 °C or the cargo has a target temperature in the range of from 2 to 8 °C, and/or the cargo comprises pharmaceuticals and/or perishable food.

## Patentansprüche

1. Ladungsabdeckung, umfassend:
ein erstes flexibles Isolationslaminat zum Abdecken eines ersten Teils der Ladung, wobei das erste Laminat eine erste Anordnung von Schichten umfasst, und
ein zweites flexibles Isolationslaminat zum Abdecken eines zweiten Teils der Ladung, wobei das zweite Laminat eine zweite Anordnung von Schichten umfasst, die von der ersten Anordnung von Schichten verschieden ist,
wobei das erste Laminat mit dem zweiten Laminat verbunden ist oder angeordnet ist, um mit dem zweiten Laminat verbunden zu werden,
wobei das erste Isolationslaminat der Ladungsabdeckung eine Phasenwechselmaterialschicht umfasst, die ein flexibles Isolationsmaterial enthält, das ein flexibles poröses Medium umfasst, das ein Porenvolumen begrenzt, und ein Fest/flüssig-Phasenwechselmaterial (PCM) innerhalb des Porenvolumens.

2. Ladungsabdeckung nach Anspruch 1, umfassend eines oder mehrere weitere flexible Isolationslaminate zum Abdecken eines oder mehrerer weiterer Teile der Ladung, wobei das eine oder die mehreren weiteren Laminate weitere Anordnungen von Schichten umfassen, die von der ersten und zweiten Anordnung von Schichten verschieden sind, und mit wenigstens einem des ersten oder zweiten Laminats verbunden sind oder angeordnet sind, um mit wenigstens einem des ersten oder zweiten Laminats verbunden zu werden.

3. Ladungsabdeckung nach Anspruch 1 oder Anspruch 2, eine Vielzahl von ersten Laminaten und/oder eine Vielzahl von zweiten Laminaten umfassend.

4. Ladungsabdeckung nach einem der vorhergehenden Ansprüche, wobei das erste und/oder zweite Laminat umfasst:
ein flexibles, dampfdurchlässiges Ladungsabdeckungslaminat, umfassend:
eine Außenschicht, die ein eine Beschichtung tragendes Substrat umfasst, wobei die Beschichtung Teilchen aus Infrarot-reflektierendem Material in einer Polymermatrix dispergiert aufweist und eine freiliegende Oberfläche mit geringem Emissionsvermögen auf einer Außenseite der Außenschicht bereitstellt, und
eine auf eine Innenseite der Außenschicht laminierte Tragschicht, oder
ein flexibles, dampfundurchlässiges Ladungsabdeckungslaminat, umfassend:
eine dampfundurchlässige Außenschicht, die eine freiliegende Oberfläche mit geringem Emissionsvermögen auf einer Außenseite der Außenschicht umfasst,
eine innere Konvektionsbarriereschicht und
einen eine Fasereinlage umfassenden Isolationskern, wobei der Isolationskern zwischen der Außen- und der Innenschicht einliegt.

5. Ladungsabdeckung nach einem der vorhergehenden Ansprüche, wobei das erste flexible Isolationslaminat angeordnet ist, eine Oberseite der Ladung zu bedecken, und das zweite flexible Isolationslaminat angeordnet ist, eine Seite der Ladung zu bedecken.

6. Ladungsabdeckung nach einem der vorhergehenden Ansprüche, wobei das erste flexible Isolationslaminat einen größeren Wärmewiderstand als das zweite flexible Isolationslaminat besitzt.

7. Ladungsabdeckung nach einem der vorhergehenden Ansprüche, einen kastenförmigen Aufbau aufweisend, der einen Hohlraum zur Aufnahme einer Palette mit Ladung umgibt.

8. Ladungsabdeckung nach einem der vorhergehenden Ansprüche, wobei das Phasenwechselmaterial einen Bereich von 50 bis 95 % des Porenvolumens ausfüllt.

9. Ladungsabdeckung nach einem der vorhergehenden Ansprüche, wobei das poröse Medium Fasern umfasst.

10. Ladungsabdeckung nach einem der vorhergehenden Ansprüche, wobei das poröse Medium ein Vliesmaterial, optional ein Schmelzblasmaterial, umfasst.

11. Ladungsabdeckung nach einem der vorhergehenden Ansprüche, wobei das PCM organisch ist, optional eine Verbindung mit einer Kohlenstoffkette von wenigstens 8 Kohlenstoffatomen umfassend.

12. Ladungsabdeckung nach einem der vorhergehenden Ansprüche, wobei das PCM bei einer Temperatur im Bereich von 2 bis 30 °C die Phase wechselt.

13. Ladungsabdeckung nach einem der vorhergehenden Ansprüche, wobei die PCM-Schicht eine Dicke im Bereich von 0,5 bis 10 mm besitzt.

14. Verfahren zum Isolieren von Ladung, wobei das Verfahren das Abdecken der Ladung mit einer Ladungsabdeckung nach einem der vorhergehenden Ansprüche umfasst.

15. Verfahren nach Anspruch 14, wobei die Ladung eine Zieltemperatur im Bereich von 15 bis 25 °C besitzt oder die Ladung eine Zieltemperatur im Bereich von 2 bis 8 °C aufweist und/oder die Ladung Pharmazeutika und/oder verderbliche Nahrungsmittel umfasst.

## Revendications

1. Couverture de cargaison comprenant :
un premier stratifié d'isolation souple destiné à recouvrir une première partie de la cargaison, le premier stratifié comprenant un premier agencement de couches ; et
un second stratifié d'isolation souple destiné à recouvrir une seconde partie de la cargaison, le second stratifié comprenant un second agencement de couches qui est différent du premier agencement de couches,
le premier stratifié étant joint, ou agencé pour être joint, au second stratifié,
ledit premier stratifié d'isolation de la couverture de cargaison comprenant une couche de matériau à changement de phase comprenant un matériau d'isolation souple comprenant un milieu poreux souple définissant un volume de pores, et un matériau à changement de phase solide/liquide (PCM) à l'intérieur du volume poreux.

2. Couverture de cargaison selon la revendication 1, comprenant un ou plusieurs stratifiés d'isolation souples supplémentaires destinés à recouvrir une ou plusieurs parties supplémentaires de la cargaison, ledit ou lesdits stratifiés supplémentaires comprenant des agencements supplémentaires de couches différents des premier et second agencements de couches et étant joints, ou agencé pour être joints à au moins l'un des premier et second stratifiés.

3. Couverture de cargaison selon la revendication 1 ou la revendication 2, comprenant une pluralité de premiers stratifiés et/ou une pluralité de seconds stratifiés.

4. Couverture de cargaison selon une quelconque revendication précédente, ledit premier et/ou ledit second stratifié comprenant :
un stratifié de couverture de cargaison perméable à la vapeur souple comprenant :
une couche externe comprenant un substrat portant un revêtement, le revêtement possédant des particules de matière à réflexion infrarouge dispersées à l'intérieur d'une matrice polymère et fournissant une surface de faible émissivité exposée sur une face extérieure de la couche externe ; et
une couche de support stratifiée sur une face intérieure de la couche externe ; ou
un stratifié de couverture de cargaison imperméable à la vapeur souple comprenant :
une couche externe imperméable à la vapeur comprenant une surface de faible émissivité exposée sur une face extérieure de la couche externe ;
une couche barrière de convection interne ; et
une âme d'isolation comprenant un rembourrage fibreux, l'âme d'isolation étant intercalée entre les couches externe et interne.

5. Couverture de cargaison selon une quelconque revendication précédente, ledit premier stratifié d'isolation souple étant agencé pour recouvrir une partie supérieure de la cargaison et ledit second stratifié d'isolation souple étant agencé pour recouvrir un côté de la cargaison.

6. Couverture de cargaison selon une quelconque revendication précédente, ledit premier stratifié d'isolation souple possédant une résistance thermique plus élevée que le second stratifié d'isolation souple.

7. Couverture de cargaison selon une quelconque revendication précédente une configuration en forme de boîte définissant une cavité destinée à recevoir une palette de cargaison.

8. Couverture de cargaison selon une quelconque revendication précédente, ledit matériau à changement de phase remplissant dans la plage allant de 50 à 95 % du volume de pores.

9. Couverture de cargaison selon une quelconque revendication précédente, ledit milieu poreux comprenant des fibres.

10. Couverture de cargaison selon une quelconque revendication précédente, ledit milieu poreux comprenant un matériau non tissé, éventuellement un matériau de fusion-soufflage.

11. Couverture de cargaison selon une quelconque revendication précédente, ledit PCM étant organique, comprenant éventuellement un composé possédant une chaîne carbonée d'au moins huit atomes de carbone.

12. Couverture de cargaison selon une quelconque revendication précédente, ledit PCM changeant de phase à une température comprise dans la plage allant de 2 à 30°C.

13. Couverture de cargaison selon une quelconque revendication précédente, ladite couche PCM possédant une épaisseur comprise dans la plage allant de 0,5 à 10 mm.

14. Procédé d'isolation de cargaison, le procédé comprenant le recouvrement de la cargaison avec une couverture de cargaison selon une quelconque revendication précédente.

15. Procédé selon la revendication 14, ladite cargaison possédant une température cible comprise dans la plage allant de 15 à 25°C ou ladite cargaison possédant une température cible comprise dans la plage allant de 2 à 8°C, et/ou ladite cargaison comprenant des produits pharmaceutiques et/ ou des denrées périssables.
